(19) Europäisches Patentamt / European Patent Office / Office européen des brevets

(11) **EP 3 390 965 B1**

(12) **FASCICULE DE BREVET EUROPEEN**

(45) Date de publication et mention de la délivrance du brevet:
**05.02.2025 Bulletin 2025/06**

(21) Numéro de dépôt: **16825512.3**

(22) Date de dépôt: **14.12.2016**

(51) Classification Internationale des Brevets (IPC):
***G01C 21/26*** *(2006.01)*

(52) Classification Coopérative des Brevets (CPC):
**G01C 21/26; B60T 2210/10; B60T 2210/36**

(86) Numéro de dépôt international:
**PCT/FR2016/053423**

(87) Numéro de publication internationale:
**WO 2017/103474 (22.06.2017 Gazette 2017/25)**

(54) **PROCÉDÉ DE REPRÉSENTATION CARTOGRAPHIQUE DE DONNÉES CONCERNANT L'ÉTAT D'UNE ROUTE**

VERFAHREN ZUR DARSTELLUNG VON DATEN IM ZUSAMMENHANG MIT STRASSENZUSTÄNDEN

METHOD FOR MAPPING DATA RELATING TO ROAD CONDITIONS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **17.12.2015 FR 1562578**

(43) Date de publication de la demande:
**24.10.2018 Bulletin 2018/43**

(73) Titulaire: **Compagnie Générale des Etablissements Michelin**
**63000 Clermont-Ferrand (FR)**

(72) Inventeurs:
• **PATURLE, Antoine**
**63040 Clermont-Ferrand Cedex 9 (FR)**
• **PETIT, Clément**
**63040 Clermont-Ferrand Cedex 9 (FR)**
• **TERRETTAZ, Frédéric**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
JP-A- 2005 115 687      US-A- 5 586 028
US-A1- 2013 155 061      US-A1- 2015 106 299

• BORRIELLO GAETANO ET AL: "Demo : Mobile Crowdsensing of Road Surface Roughness", PROCEEDINGS OF THE 13TH ANNUAL INTERNATIONAL CONFERENCE ON MOBILE SYSTEMS, APPLICATIONS, AND SERVICES, MOBISYS '15, FLORENCE, ITALY, MAY 18 - 22, 2015, 18 May 2015 (2015-05-18), New York, New York, USA, pages 439 - 439, XP093162803, ISBN: 978-1-4503-3494-5
• WANG MING ET AL: "Implementation of a multimodal mobile sensor system for surface and subsurface assessment of roadways", PROCEEDINGS OF SPIE, IEEE, US, vol. 9436, 27 March 2015 (2015-03-27), pages 943607 - 943607, XP060052485, ISBN: 978-1-62841-730-2, DOI: 10.1117/12.2084852
• DEEPAK RAJAMOHAN: "ROAD CONDITION AND TEXTURE ESTIMATION BY FUSING GPS, ACCELEROMETER AND CAMERA DATA", 1 September 2014 (2014-09-01), XP093162922, Retrieved from the Internet <URL:https://www. researchgate. net/publication/281458672_ROAD_CONDITIO N_AND_TEXTURE_ESTIMATION_BY_FUSING_G PS_ACCELEROMETER_AND_CAMERA_DATA>

## Description

L'invention concerne procédé de représentation cartographique de données concernant l'état d'une route. L'invention met notamment, mais non exclusivement, en oeuvre une méthode de détection de l'état de la route et du pneumatique équipant un véhicule se déplaçant sur cette route, à partir du bruit généré par le pneumatique lorsque celui-ci entre en contact avec le sol.

Il s'avère utile en effet de connaître à tout instant l'état de la route ou du pneumatique, pour interagir avec le conducteur ou avec les systèmes d'assistance à la conduite, de manière à les informer en temps réel de l'évolution des conditions de roulage, et plus généralement, de la modification possible des conditions d'adhérence du pneumatique et de la tenue de route du véhicule. Ces méthodes ont donc pour objet de mettre en évidence l'évolution des conditions météorologiques telles que le passage entre des conditions de roulage sur sol sec, humide, mouillé, enneigé ou glacé.

Afin que ces données soient exploitables, il s'avère utile qu'elles soient affichées de manière lisible et compréhensible pour un utilisateur tel qu'un conducteur de véhicule.

On connaît ainsi des cartes permettant de connaître en temps réel la météo sur un certain trajet, par exemple à partir de données fournies par des services météorologiques. Toutefois, bien que permettant d'avoir une première idée sur les conditions de roulage sur un trajet, elles ne permettent pas de connaître précisément l'état d'une route à un instant donné, information qui pourrait permettre à un conducteur, ou au système de sécurité d'un véhicule, d'adapter les conditions de roulage, et donc de réduire les risques d'accident.

Le document US 2015/106299 A1 divulgue un procédé et système pour la surveillance et la maintenance des routes. Des véhicules dédiés parcours les routes en enregistrant leur positions et des images caméra associées, et envoient leurs données sur un serveur centralisant et traitant les données reçues. Les traces GPS des véhicules sont affichées sur une carte interactive permettant aussi d'afficher les images acquises de la route associées aux positions GPS. L'état de la route (neige, pluie, verglas, nid de poule) peut ainsi être visualisé sur la carte, et des véhicules de maintenance peuvent être envoyés lorsque nécessaire (déneigement, salage, réparation, etc.).

Le document US 2013/155061 A1 divulgue un procédé et système pour la surveillance et l'évaluation de l'état du revêtement d'une route par l'enregistrement d'image par une caméra montée sur un véhicule circulant sur la route, permettant ainsi d'évaluer l'état de la texture du revêtement et identifier les défauts et dommages.

Le document intitulé "Demo : Mobile Crowdsensing of Road Surface Roughness" par Borriello Gaetano et al. (Proceedings of the 13th Annual International Conference on Mobile Systems, Applications, and Services, MobiSys '15, Florence, Italy, May 18 - 22, 2015, 18 mai 2015, pages 439-439, XP093162803) divulgue l'affichage sur une carte de l'état du revêtement d'une route enregistré par des capteurs montés sur des véhicules, dans lequel un code de couleurs superposé à la représentation des routes indique la rugosité du revêtement.

Le document intitulé "Implementation of a multi-modal mobile sensor system for surface and subsurface assessment of roadways" par Wang Ming et al. (PROCEEDINGS OF SPIE, IEEE, US, vol. 9436, 27 mars 2015, pages 943607-943607, XP060052485) divulgue l'affichage sur une carte de l'état du revêtement d'une route enregistré par des capteurs montés sur des véhicules, dans lequel un code de couleurs superposé à la représentation des routes indique un index de l'état du revêtement ("equivalent pavement condition index").

Le document intitulé "road condition and texture estimation by fusing GPS, accelerometer and camera data" par Deepak Rajamohan (1 septembre 2014, XP093162922) divulgue l'affichage sur une carte de l'état du revêtement d'une route enregistré par des capteurs montés sur un véhicule, dans lequel un code de couleurs superposé à la trace GPS du véhicule indique le type de revêtement.

Ainsi l'invention vise à remédier à ce manquement en proposant un procédé de représentation cartographique de données concernant l'état d'une route selon la revendication 1.

Dans un mode de réalisation préférentiel, l'état météo est compris dans le groupe comprenant : un état sec, un état humide et un état mouillé ou un état hivernal tel qu'un état de neige ou de glace. Un état de neige peut, dans un mode de réalisation préférentiel, être compris dans le groupe comprenant un état neige fraîche, un état neige compacte, un état neige granuleuse et un état neige fondue.

Un état humide est caractérisé par une hauteur d'eau affleurant les rugosités naturelles du revêtement de la route ; cet état humide correspond par exemple à l'état obtenu par une petite pluie ou une route qui s'assèche après une forte pluie. Un état mouillé, quant à lui, est caractérisé par une hauteur d'eau dépassant le niveau des rugosités naturelles du revêtement de la route. En pratique, l'état mouillé correspond à une hauteur d'eau généralement comprise entre 0,5 millimètres et 1 millimètre.

Selon l'invention, au cours de l'étape d'enregistrement, on enregistre également une information concernant la macro-texture du revêtement, et dans ce cas l'étape d'affichage comprend également la représentation de cette macro-texture. Cette macro-texture du revêtement est, de manière préférentielle, comprise dans le groupe comprenant un état fermé, un état médium et un état ouvert.

Un revêtement est qualifié de revêtement fermé lorsqu'il prend un aspect lisse et sans rugosités, comme par exemple un bitume ayant ressué après avoir subi de fortes chaleurs. Un revêtement sera considéré comme ouvert lorsque les rugosités sont importantes, par exemple comme celles d'un revêtement usé ou celui d'une route de campagne réparée rapidement à l'aide d'un enduit superficiel réalisé par projection de cailloux sur du bitume. Un revêtement medium décrit tous les revêtements dans un état intermédiaire entre les deux états précédents et qualifie plus particulièrement les revêtements neufs.

La macro-texture d'un revêtement, joue sur ses propriétés de drainabilité de l'eau mais aussi sur ses propriétés acoustiques. Cette texture est caractérisée par une « Profondeur Moyenne de Texture », également appelée « PMT ». Cette PMT est mesurée par la hauteur au sable vrai, également notée HSv, bien connue de l'homme du métier.

On peut ainsi catégoriser les différentes macro-textures de la façon suivante : un revêtement à macro-texture fermée présente une PMT comprise entre 0 et 0.4 millimètres. Un revêtement à macro-texture medium présente une PMT entre 0.4 et 1.1 millimètres, et un revêtement à macro-texture ouverte présente une PMT supérieure à 1.1 millimètres.

On précise ici que l'affichage de l'état météo de la route et l'affichage de la macro-texture du revêtement peuvent être effectués indépendamment l'un de l'autre sur deux cartes différentes, ou mentionnés sur une même carte.

Dans un autre mode de réalisation préférentiel encore, au cours de l'étape d'enregistrement, on enregistre également une information concernant un évènement ponctuel affectant l'état de la route, et dans ce cas, l'étape d'affichage comprend également la représentation de cet évènement.

Ces évènements, également appelés « road hazard », correspondent à des obstacles ou des modifications ponctuelles du revêtement routier, tels que par exemple la présence de gravier, de terre ou de sable sur la route, ou bien encore des détériorations telles que des nids de poules. L'ensemble de ces évènements peuvent avoir une influence sur les conditions de roulage d'un véhicule sur la route, et il est donc utile, dans un mode de réalisation, de pouvoir en connaître le positionnement sur un trajet.

Ainsi que mentionné précédemment, l'invention trouve une application avantageuse dans l'aide à la conduite pour des conducteurs ou pour des systèmes de sécurité installés sur des véhicules. Afin que cette aide soit pertinente, et compte tenu du caractère ponctuel et changeant des différents éléments influant sur l'adhérence, il est utile que les cartographiques soient mises à jour en temps réel. A cet effet, dans un mode de réalisation préférentiel, les différentes informations concernant l'état de la route sont déterminées en temps réel par le véhicule, par exemple à une fréquence de trois déterminations par seconde, et sont aussitôt transmises à une base de données distante. Cette transmission est effectuée par un moyen de télécommunications, par exemple par GSM.

Afin d'améliorer encore la qualité des informations fournies sur la carte, dans un mode de réalisation avantageux de l'invention, on enregistre des informations et des positions GPS provenant de plusieurs véhicules différents. En effet, une telle caractéristique permet d'obtenir un plus grand nombre de données concernant l'état de la route sur un trajet donné, et ainsi de renforcer l'aspect « temps réel » de l'invention. Ces données sont alors regroupées pour être affichées sous forme d'une carte unique pour l'ensemble des véhicules.

Afin de permettre une mise à jour correcte des données transmises par différents véhicules, il est utile, dans un mode de réalisation avantageux, qu'un procédé selon l'invention comprenne l'étape d'enregistrer, outre la position GPS du véhicule, la date et l'heure de l'enregistrement. Ainsi, il devient possible de mettre à jour l'affichage si des données enregistrées concernant un segment de route pour lequel des données ont déjà été affichées, à condition que les données enregistrées aient une date et une heure ultérieures aux données ayant fait l'objet d'un affichage préalable. Il est à noter que cette mise à jour est particulièrement avantageuse pour les données concernant l'état météo de la route ou les évènements ponctuels. En effet, la macro-texture du revêtement, quant à elle, n'évolue pas très rapidement dans le temps.

Concernant les évènements ponctuels, il est possible, dans un mode de réalisation de l'invention, d'attendre de recevoir des informations concordantes de plusieurs véhicules avant d'afficher la présence d'un évènement, et ce afin de robustifier les données affichées.

Un procédé selon l'invention peut trouver plusieurs applications avantageuses. Ainsi, dans un exemple, un tel procédé permet d'estimer, en fonction des différents enregistrements effectués et de leur position GPS, des caractéristiques d'adhérence de la route, et ce procédé comprend en outre l'étape d'afficher ces caractéristiques sur une carte du trajet. Par « caractéristique d'adhérence » on entend par exemple la drainabilité de la route, qui peut être estimée au vu de la macro-texture du revêtement. On peut également envisager de combiner les différentes données pour obtenir une indication sur un niveau d'adhérence de la route. Toutefois, ces données ne prennent pas en compte les pneumatiques ni les véhicules, et ne peuvent donc pas déterminer précisément le coefficient d'adhérence pour un véhicule circulant sur une route.

Dans une autre application avantageuse, un procédé selon l'invention permet d'estimer, en fonction des différents enregistrements effectués et de leur position GPS, des caractéristiques acoustiques du revêtement sur un trajet, et comprend en outre l'étape d'afficher ces caractéristiques sur une carte. Ces caractéristiques sont utiles à connaître car elles donnent une indication sur un niveau potentiel de bruit généré par un véhicule roulant sur le trajet. En effet, on sait que le bruit généré par un véhicule circulant sur un revêtement routier dépend des caractéristiques de ce revêtement. Ainsi, on sait par exemple que plus un revêtement de route est fermé, plus il va exciter la sculpture d'un pneumatique et générer du bruit. Le bruit est d'autant plus élevé que la sculpture du pneumatique est neuve. De la même façon, une route ouverte excite les modes de vibration du pneumatique, qui génèrent également du bruit à l'extérieur du véhicule, et ce indépendamment de l'état du pneumatique.

On précise toutefois, comme pour les caractéristiques d'adhérence, qu'il n'est pas possible d'établir une carte précise du bruit généré, car ce bruit dépend de chaque véhicule, ainsi que des pneumatiques et de leur état.

Dans une autre application avantageuse, un procédé selon l'invention comprend l'étape de déterminer, en fonction des différents enregistrements effectués, des zones de détérioration du revêtement, et comprend en outre l'étape d'afficher ces zones sur une carte. En effet, des informations telles que la macro-texture du revêtement et les évènements ponctuels sont intéressantes pour les exploitants des réseaux routiers et autoroutiers, et peuvent permettre de savoir en temps réel quelles zones de leurs réseaux nécessitent une action de maintenance.

Dans une autre application avantageuse encore, un procédé selon l'invention comprend l'étape d'identifier, en fonction des différents enregistrements effectués, des zones sur lesquels l'état météo de la route est un état hivernal, à savoir un état de neige ou un état de glace. En effet, une telle information permet, à des exploitants des réseaux routiers et autoroutiers, de connaître les zones de leurs réseaux nécessitant une action telle que le sablage pour remédier aux conditions hivernales de circulation.

Dans un mode de réalisation préféré de l'invention, l'étape de détermination par le véhicule de l'état météo de la route ou de la macro-texture du revêtement comprend les étapes suivantes :

- on enregistre une mesure d'un signal sonore produit par le pneumatique roulant sur une surface de la route pendant une trame temporelle donnée,

- on détermine une densité spectrale de puissance du signal sonore sur un intervalle de fréquence donné,

- on segmente l'intervalle de fréquence en une pluralité de bandes de fréquence de largeurs préalablement déterminées, et on associe à chaque bande de fréquence une donnée représentative d'une puissance sonore moyenne mesurée dans ladite bande de fréquence, les données représentatives issues d'une mesure formant des variables d'un vecteur associé à ladite mesure,

- on détermine un état de la route et du pneumatique correspondant au vecteur associé à la mesure réalisée, à l'aide d'une analyse discriminante des données fondée sur une base d'apprentissage formée d'un ensemble de vecteurs associés à des mesures préalablement enregistrées et réalisées, selon les mêmes étapes que ci-dessus, dans des conditions de roulage connues selon des modalités représentant chacune un état donné de la route et du pneumatique,

caractérisée en ce que les données représentatives formant les variables du vecteur associé à une mesure sont obtenues en faisant le ratio entre la puissance sonore moyenne mesurée dans une bande de fréquence et une puissance sonore totale mesurée sur tout l'intervalle de fréquence.

La détermination de l'état de la route est ainsi basée sur le constat que la fréquence et l'intensité sonores engendrées par le pneumatique varient lorsque l'état de la route change, et analysent des enregistrements sonores réalisés par des microphones disposés à proximité du pneumatique et de la route. A partir de l'enregistrement d'un spectre fréquentiel des puissances sonores, on détermine l'état météorologique de la route à l'aide de ratios judicieusement choisis ou en comparant ce spectre à des données préenregistrées.

Les enregistrements sonores sont réalisés à l'aide d'un microphone judicieusement placé sur le véhicule. La densité spectrale de la puissance sonore est répartie sur un intervalle de fréquence donné. Ce spectre varie en fonction d'un ensemble de modalités telles que les conditions météorologiques, l'état de la route, le degré d'usure du pneumatique, le type de sculpture du pneumatique, et dans une moindre mesure, la pression de gonflage, la charge etc. Une des modalités majeures susceptible de modifier ce spectre, toutes les conditions restant égales par ailleurs, est la vitesse du véhicule au moment où on effectue la mesure.

Il a été mis en évidence que cette variation pouvait être pratiquement neutralisée si, au lieu de considérer le spectre de puissance issu de la mesure, on recalcule ce spectre en "normalisant" les données mesurées à l'aide de la puissance sonore totale enregistrée pendant le temps de mesure sur l'ensemble de l'intervalle de fréquence. Ce qui a pour objet de gommer l'effet vitesse et de rendre la mesure sensiblement invariante à cette modalité.

Le procédé se caractérise en ce que les données représentatives formant les variables d'un vecteur associé à une mesure sont obtenues en faisant le ratio entre la puissance sonore moyenne mesurée dans une bande de fréquence et la puissance sonore totale mesurée sur tout l'intervalle de fréquence. De la sorte, contrairement aux procédés existants dans l'état de la technique, il n'est plus nécessaire de tenir compte de la vitesse, pour obtenir, à partir d'une seule mesure acoustique et sans qu'il soit nécessaire d'introduire des paramètres supplémentaires pour interpréter la mesure, des informations fiables sur l'état de la route et, comme on le verra également, sur l'état du pneumatique.

La méthode selon l'invention peut aussi comprendre isolément ou en combinaison les caractéristiques suivantes :

- La puissance sonore totale mesurée est égale à la somme des puissances sonores moyennes de toutes les bandes de fréquence de l'intervalle de fréquence considéré.
- Les bandes de fréquence sont déterminées en découpant l'intervalle de fréquence par tiers d'octave.
- La trame temporelle d'une mesure est inférieure ou égale à 0,5 secondes, et préférentiellement inférieure ou égale à 0,25 secondes.
- L'intervalle de fréquence est compris entre 0Hz et 20KHz
- L'intervalle de fréquence est compris entre 200Hz et 20KHz.
- Une classe de modalités "météo", formée par différents états météorologiques de la route, comprend un état sec, un état humide et un état mouillé.
- Une classe de modalités " macro-texture du revêtement", formée par différents états du revêtement de la route, comprend un état fermé, un état médium et un état ouvert.
- Une classe de modalités "usure", formée par différents états d'usure du pneumatique, comprend un état neuf, un état mi-usé et un état usé.
- Une classe de modalités "sculpture", formée par différents types de sculptures de pneumatiques, comprend une sculpture de type été et une sculpture de type hiver.
- L'analyse discriminante des données prévoit les étapes au cours desquelles :

  ○ à partir de la base d'apprentissage, on détermine un espace discriminant réduit dans lequel on identifie des zones formées par chaque modalité ou combinaison de modalités,
  ○ on transforme le vecteur associé à une mesure dans ledit espace discriminant réduit et, en fonction de la localisation dudit vecteur, on associe à la mesure une probabilité selon chacune des modalités ou des combinaisons de modalités,
  ○ on détermine la modalité la plus probable selon chacune des classes de modalités.

- On associe à la mesure une modalité selon la modalité "macro-texture du revêtement", "usure" ou "sculpture", après avoir préalablement déterminé que la mesure a été effectuée sur une route sèche.
- On associe à la mesure une probabilité selon chacune des combinaisons de modalités contenant cette modalité, et on attribue à cette mesure la modalité de la classe ayant la plus forte probabilité.
- On réalise un diagnostic de l'état du pneumatique selon la modalité "usure" ou la modalité "sculpture" en combinant les résultats de mesures effectuées à des intervalles de temps différents.
- On mesure le signal sonore engendré par le pneumatique à l'aide d'un microphone placé dans la partie avant d'un passage de roue situé à l'arrière du véhicule.

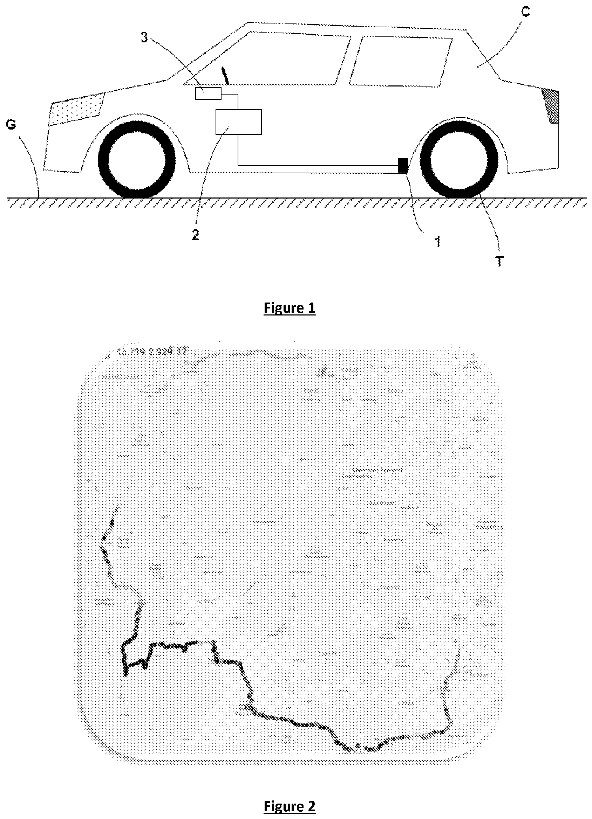

Dans un mode de réalisation préférentiel, on mesure le signal sonore engendré par le pneumatique (T) à l'aide d'un microphone (1) placé dans le véhicule. Sur la figure 1, le microphone est placé dans la partie avant d'un passage de roue situé à l'arrière du véhicule (C). Toutefois, on peut envisager d'autres emplacements tels que, par exemple, le pare-chocs arrière. Le choix de l'emplacement pour le microphone dépend, par exemple, du type de données qu'on souhaite estimer, du type de véhicule et des contraintes externes liées à son installation, à sa maintenance, et à sa durabilité.
L'invention sera mieux comprise à la lecture des figures annexées, qui sont fournies à titre d'exemples et ne présentent aucun caractère limitatif, dans lesquelles :

- La figure 1 représente un véhicule équipé d'un dispositif permettant la détermination d'un état de la route.

- Les figures 2, 3 présentent différents affichages d'informations déterminées par un véhicule, dans le cadre de la présente invention.
  Les figures suivantes seront utiles pour la description d'un procédé de détermination de l'état de la route tel que mis en oeuvre dans un mode de réalisation particulier de la présente invention :

  - La figure 4 représente un spectre de puissance sonore non "normalisé" pour des mesures réalisées à des vitesses différentes.

  - La figure 5 représente le même spectre de puissance après "normalisation".

  - La figure 6 représente les spectres moyens de puissance normalisés pour différents états météorologiques de la route.

- La figure 7 représente une répartition des mesures dans un espace discriminant réduit à deux dimensions selon l'état météorologique de la route.

Le véhicule C roulant sur un sol G, représenté de manière schématique à la figure 1, comprend des passages de roue avant et arrière dans lesquels sont logées les roues équipées de pneumatiques T.

Lorsque le véhicule C se déplace, le pneumatique T génère un bruit dont l'amplitude et la fréquence dépendent de multiples facteurs. Cette pression sonore est en fait la superposition de bruits d'origines variées tels que les bruits engendrés par la mise en contact des pains de la sculpture avec le sol G, par les mouvements d'air entre les éléments de sculpture, par les particules d'eau soulevées par le pneumatique, ou encore par les écoulements d'air liés à la vitesse du véhicule. L'écoute de ces bruits se superpose également avec les bruits liés à l'environnement du véhicule tels que le bruit du moteur. Tous ces bruits sont également dépendants de la vitesse du véhicule.

Un moyen d'écoute, tel qu'un microphone 1 est installé dans le véhicule. On précise ici que différentes positions peuvent être envisagées pour le microphone, une seule étant montrée sur la figure 1, mais ne limitant pas la portée de l'invention à cette configuration. Ainsi, on peut positionner le microphone sur une paroi du pare-chocs arrière, par exemple mais non nécessairement orienté de façon à détecter un signal sonore provenant de l'arrière du véhicule.

On peut également envisager un positionnement sur une paroi du pare-chocs avant d'un véhicule. On peut également positionner le microphone dans un passage de roue pour écouter les bruits de roulement aussi près que possible du lieu où ils sont engendrés. Idéalement, on peut considérer que l'installation d'un microphone dans chacun des passages de roue constitue le meilleur moyen de capter tous les bruits de roulage engendrés par les pneumatiques. Toutefois, pour déterminer l'état de la route (état météorologique et macro-texture du revêtement), un seul microphone est suffisant. Dans ce dernier cas, il est préférable de l'isoler des bruits aérodynamiques et du moteur.

Bien évidemment, les précautions d'usage sont prises pour protéger le microphone des agressions extérieures telles que les projections d'eau, de boue ou de gravillons.

Le véhicule comprend également un calculateur 2, relié au microphone, et configuré pour exécuter les opérations permettant de mettre en forme et d'analyser, comme cela sera décrit en détails par la suite, l'information brute provenant du microphone, et d'estimer l'état de la route ou du pneumatique en fonction d'une mesure de la puissance sonore détecté par le microphone.

Ainsi que précédemment mentionné, on précise ici que par « état de la route » on entend une ou plusieurs informations parmi : un état météo de la route, la macro-texture du revêtement, ou encore un évènement ponctuel affectant la route. Ces informations, déterminées dans le véhicule par le calculateur 2, sont transmises, par exemple par des moyens GSM installés dans ou reliés au calculateur, à une base de données externe. Elles sont accompagnées de la position GPS du véhicule au moment de la capture des données ayant servi à la détermination de l'information. Elles sont également, dans un exemple de réalisation, accompagnées d'une information d'horodatage. Il est à noter que cette transmission peut être effectuée en temps réel, afin de permettre une mise à jour de l'affichage en temps réel, ou avec un faible décalage temporel.

Une fois ces informations transmises, il est alors possible, compte tenu de la présence des coordonnées GPS, d'afficher les informations sur une carte correspondant au trajet effectué par le véhicule transmettant les données.

Ainsi, la figure 2 montre une carte routière sur laquelle a été superposé, sur un trajet donné, un trait dont la teinte correspond à l'état météo de la route à cet endroit donné. Trois teintes ont été utilisées pour cet affichage : une teinte foncée correspondant à un état mouillé, une teinte intermédiaire correspondant à un état humide, et une teinte claire correspondant à un état sec.

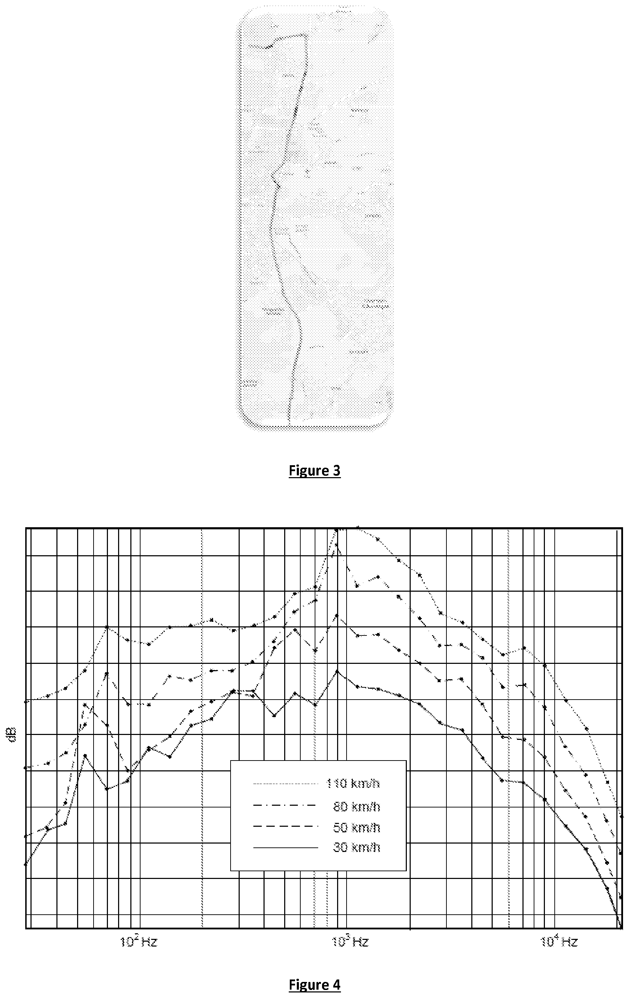

Selon l'invention, la macro-texture du revêtement fait aussi l'objet d'un affichage sur une carte. Une telle carte selon la présente invention est montrée en figure 3, sur laquelle un trait en différentes teintes est utilisé pour représenter différents états du revêtement. Sur cette figure, la teinte foncée correspond à une macro-texture fermée, la teinte intermédiaire correspond à une macro-texture medium, et la teinte claire correspond à une macro-texture ouverte.

Les données affichées sur ces cartes proviennent d'un unique véhicule ayant effectué le trajet complet. Toutefois, il est possible, dans un exemple de réalisation de l'invention, d'afficher sur une même carte les informations provenant de différents véhicules. Cela permet, d'une part de couvrir une zone géographique plus importante, et d'autre part de disposer de données mises à jour plus régulièrement, et donc plus pertinentes.

De telles cartes peuvent être mises à disposition de différents acteurs :

- Des conducteurs, pour connaître l'état de la route avant de prendre le volant,
- Des sociétés gestionnaires d'autoroute, ou des services d'entretien de route, pour connaître l'état de détérioration des revêtements, ou les besoins d'actions de salage ou sablage lors de conditions de roulage hivernales,
- Des organismes publics pour connaître, à partir de ces informations, les routes « bruyantes », et ainsi pouvoir mettre en oeuvre des moyens de lutte contre les nuisances sonores ...

On va maintenant revenir en détail, à l'aide des figures suivantes, sur un procédé permettant de déterminer ces différentes informations d'état de la route à partir des relevés sonores effectués par le microphone installé sur le véhicule. On précise ici que l'invention n'est pas réduite exclusivement à ce mode de détermination.

La figure 4 est une représentation spectrale de la puissance sonore enregistrée par le microphone pendant une trame temporelle. On entend ici par trame temporelle l'intervalle de temps, généralement court, pendant lequel on effectue un enregistrement sur la base duquel sont établies les données servant de base à une mesure. Cette trame temporelle est inférieure ou égale à 0,5 secondes ou idéalement inférieure ou égale à 0,25 secondes.

Cette représentation spectrale représente la puissance sonore reçue (en dB) en fonction de la fréquence, sur un intervalle de fréquence donné, typiquement ici, l'intervalle de fréquence audible, compris entre 0 Hz et 20 KHz.

Plus spécifiquement la représentation spectrale de la figure 4 est obtenue en décomposant l'intervalle de fréquence en bandes de fréquence de largeurs prédéterminées, et en affectant à chaque bande de fréquence une valeur caractéristique égale à la puissance moyenne mesurée dans cette bande de fréquence. Un découpage de l'intervalle de fréquence par bandes de tiers d'octave semble être le plus approprié. Ainsi, chaque point de chacune des courbes de la figure 4 représente une puissance sonore moyenne pour une bande de fréquence donnée et mesurée pendant une trame temporelle dans des conditions de roulage dans lesquelles, toutes choses égales par ailleurs, on ne fait varier que la vitesse (typiquement de 30kmh à 110kmh).

On observe alors que les courbes représentant les puissances spectrales sont décalées les unes par rapport aux autres, et que la puissance sonore totale dissipée augmente en fonction de la vitesse. Pour autant la forme générale des courbes reste similaire.

Cette observation se reproduit lorsque l'on change une ou plusieurs modalités des autres classes et que l'on compare les courbes obtenues en ne faisant varier que le seul paramètre vitesse.

On détermine alors la puissance sonore totale sur l'ensemble de l'intervalle de fréquence, qui peut être assimilée à la surface comprise entre la courbe et l'axe des abscisses et, pour chaque bande de fréquence, on divise la puissance moyenne observée dans cette bande de fréquence pendant une trame temporelle donnée, par la puissance totale enregistrée pendant cette trame temporelle sur tout l'intervalle de fréquence. Cela revient en quelque sorte à "normaliser" la mesure.

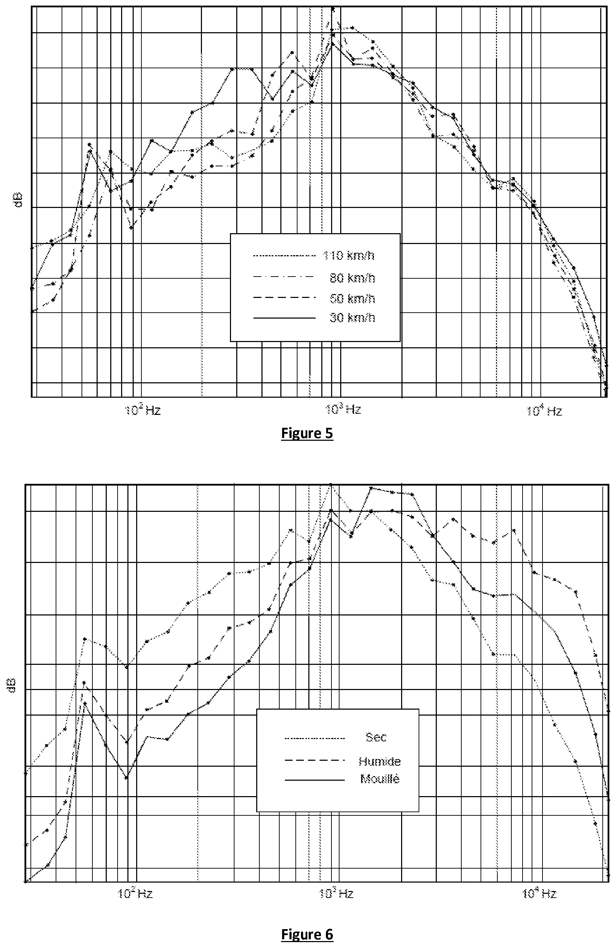

On observe alors à la figure 5 que les courbes obtenues préalablement, se recouvrent sensiblement et ont des profils très proches, en particulier dans les bandes de fréquences les plus élevées et les plus représentatives des phénomènes sonores décrits précédemment.

Cette "normalisation" permet de neutraliser l'effet lié à la vitesse, sans pour autant modifier de manière sensible la capacité d'analyse qu'il est possible de produire à partir d'un enregistrement sonore pendant une trame temporelle déterminée.

Cet avantage peut s'avérer décisif lorsque l'on ne souhaite pas relier le calculateur 2 à des moyens d'évaluation de la vitesse du véhicule, et que l'on désire obtenir des informations sur l'état de la route ou du véhicule de manière autonome.

Par souci de simplification et de rapidité dans l'exécution des calculs, on peut considérer que la puissance totale est égale à la somme des puissances moyennes dans chacune des bandes de fréquence de l'intervalle de fréquence considéré.

Chacun des points de la courbe de la figure 5 est une valeur représentative de la puissance sonore moyenne dans une bande de fréquence donnée. L'ensemble de ces points peut alors constituer un vecteur dans un espace vectoriel comprenant autant de dimensions que de bandes de fréquences. Dans l'exemple servant de support à la présente description, on obtient un vecteur comprenant 21 dimensions en considérant un intervalle de fréquence segmenté par tiers d'octave et compris dans l'intervalle de fréquence situé entre 200Hz et 20KHz. On observera au passage que la somme des valeurs formant les coordonnés d'un vecteur est égale à 1.

Le choix de l'intervalle de fréquence peut lui aussi être adapté selon que l'on souhaite éliminer totalement le bruit généré par le moteur dont l'amplitude maximale est comprise entre 50Hz et 60Hz, auquel cas on considèrera un intervalle de fréquence compris par exemple entre 200Hz et 20KHz, ou si l'on désire conserver la part d'information pertinente contenue dans la gamme de fréquence inférieure à 200Hz, auquel cas on prendra en compte le spectre sur tout l'intervalle compris entre 0Hz et 20KHz.

L'enregistrement de la puissance sonore pendant une trame de temps peut être fait à partir d'un échantillonnage à haute fréquence (autour de 40 kHz) du signal sonore.

La mise en oeuvre de l'invention comprend une phase d'apprentissage préalable, au cours de laquelle on effectue un grand nombre de mesures en faisant varier de manière connue les modalités décrites ci-dessus, et décrivant l'état météorologique, l'état de la route, l'état d'usure ou le type de sculpture du pneumatique. A chacune de ces mesures, on affecte un vecteur obtenu dans les conditions décrites ci-dessus. On constitue de la sorte une base d'apprentissage spécifique à un véhicule.

Les méthodes d'analyse et de traitement statistiques des données sont connues en soi et ne font pas l'objet de cette invention. La méthode d'analyse discriminante linéaire qui a été utilisée a permis d'obtenir des résultats fiables et robustes.

Une première étape de cette méthode consiste à déterminer les axes factoriels principaux qui permettent de réduire le nombre de dimensions au nombre juste nécessaire pour décrire les vecteurs affectés à chacune des mesures selon des axes orthogonaux. Le passage de l'espace vectoriel dont le nombre de dimensions est égal au nombre de bandes de fréquences, typiquement égal à 21 dimensions, dans l'espace discriminant réduit se fait à l'aide d'une transformation linéaire.

Une deuxième étape consiste alors, à l'aide de l'analyse discriminante proprement dite à rechercher, dans cet espace discriminant réduit les zones dans lesquelles se situent les mesures obtenues pendant la phase d'apprentissage selon une modalité unique donnée ou selon une combinaison de modalités.

On entend ici par combinaison de modalités un état représentatif d'une mesure donnée réalisée selon une modalité choisie dans chacune des classes. A titre d'exemple une mesure réalisée à l'état "mouillé", sur une route "fermée" avec un pneumatique "été" et "usé" représente la combinaison de modalité "mouillé-fermée-été-usé". Le nombre de modalités combinées est donc égal au produit du nombre de modalités de chacune des classes.

Puis, on calcule dans cet espace discriminant réduit le centre de gravité de la zone dans laquelle sont situés les points représentant une modalité ou une combinaison de modalités, ainsi qu'un intervalle de confiance représentatif de la dispersion des points d'une même zone par rapport à ce centre de gravité.

Dans l'exemple servant de support à la présente description, la diminution du nombre de dimensions entre l'espace discriminant de départ et l'espace discriminant réduit permet de passer de 21 dimensions à environ 15 dimensions. Cette faible réduction permet d'observer que c'est la prise en compte de la forme totale du spectre qui est caractéristique de l'expression des différentes modalités. Et de laisser penser que la prise en compte des puissances d'un nombre réduit de bandes de fréquence ne permet pas de faire ressortir une modalité particulière concernant la route ou le pneumatique, à l'exception des modalités liées à l'état météorologique de la route.

La figure 6, représente la répartition spectrale de la puissance sonore "normalisée", par bandes de fréquence de 1/3 d'octave pour trois états météorologiques de la route, toutes les modalités des autres classes étant égales par ailleurs.

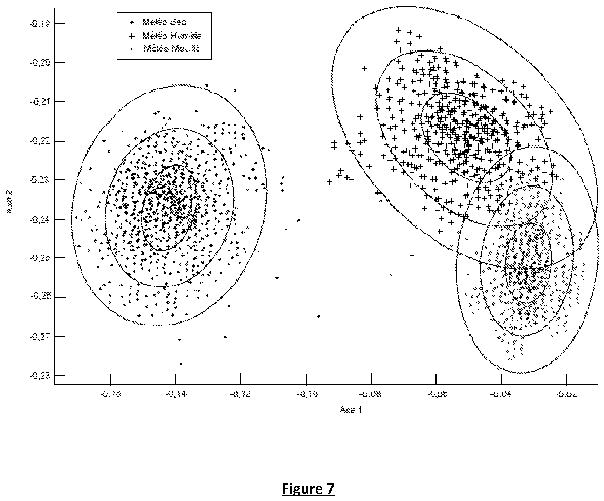

La figure 7 permet de visualiser dans un espace à deux dimensions la répartition des mesures selon une des modalités "sec", "humide", "mouillé" de la classe "météo" de la route.

Une première observation permet de constater que les mesures réalisées sur un sol sec sont ne se recouvrent pas avec les mesures réalisées sur sol humide ou mouillé. Une seconde observation, permet de conclure qu'il est possible de déterminer l'état météorologique de la route de manière indépendante des modalités des autres classes avec une bonne robustesse.

Les ellipses entourant chacun des nuages de points sont placées à un, deux et trois écarts types, et permettent d'évaluer la dispersion des mesures autour du centre de gravité, et surtout d'apprécier le taux de recouvrement d'une zone par rapport à une autre qui est représentatif du risque d'affectation à tort à une autre modalité d'une mesure réalisée selon une modalité donnée différente.

A partir de ces données, il est également possible de déterminer la probabilité d'appartenance d'une nouvelle mesure à une des trois modalités de la classe "météo" de la route en évaluant la distance de ce point au centre de gravité de chacune de ces modalités.

Le tableau 1 donne les probabilités de classification de l'état météorologique de la route selon l'une des trois modalités "sec", "humide", "mouillé".

Tableau 1

| Pj/i | J = Sec | J=Humide | J=Mouillé |
|---|---|---|---|
| i=Sec | **1** | 0 | 0 |
| i=Humide | 0 | **0,91** | 0,09 |
| i=Mouillé | 0 | 0,03 | **0,97** |

On obtient, comme on le voit, des probabilités suffisamment élevées pour conclure que le véhicule roule sur une route "sèche", "humide" ou "mouillée". Et seule la reconnaissance de la modalité "humide" peut faire l'objet d'une attribution à tort à la modalité "mouillé" dans 9% des cas.

De même, il serait possible de déterminer la macro-texture du revêtement de la route, avec une moindre robustesse que l'état météo de la route, sans qu'il soit nécessaire de connaître préalablement l'état du pneumatique. Toutefois, on préférera réaliser cette analyse lorsque la route est sèche. Cette observation suggère que certains phénomènes acoustiques liés à la macro-texture et à la réflexion du sol sont indépendants de la nature du pneumatique.

En revanche, en faisant des analyses similaires, on constate que les zones abritant les vecteurs relatifs aux modalités liées à l'état du pneumatique (usure ou sculpture) sont relativement dispersées et s'interpénètrent fortement (forte dispersion autour du centre de gravité, et faible éloignement des centres de gravité) ce qui ne permet pas de conclure à une modalité précise sans un risque élevé de détermination à tort, en particulier lorsque l'état de la route est "humide" ou "mouillé".

Aussi, pour assurer une bonne robustesse, la méthode prévoit de faire une première analyse de l'état météorologique de la route et, lorsqu'il est observé que le véhicule roule sur un sol "sec", de procéder à une deuxième analyse permettant de discerner les modalités relatives au revêtement de la route, à l'état d'usure du pneumatique et au type de sculpture du pneumatique.

Pour plus de robustesse, il semble alors préférable de faire l'analyse discriminante en s'appuyant sur les modalités combinées des trois classes. On localise dans l'espace discriminant réduit les nuages de points représentatifs des vecteurs et des mesures réalisées selon une combinaison donnée de modalités choisies dans chacune des trois classes de modalité " macro-texture du revêtement", "usure", "sculpture".

Les modalités liées à la sculpture du pneumatique sont notées "A" pour un pneumatique "hiver" et "P" pour un pneumatique "été", les modalités de l'état d'usure sont notées "N" pour un pneumatique "neuf", "M" pour un pneumatique "mi-usé" et "U" pour un pneumatique "usé", et enfin, les modalités de la macro-texture du revêtement sont notées "f" pour la modalité "fermée", "m" pour la modalité "médium" et "o" pour la modalité "ouverte". Les 18 modalités combinées sont alors notées respectivement : ANf, ANm, ANo, AMf, AMm, AMo, AUf, AUm, AUo, PNf, PNm, PNo, PMf, PMm, PMo, PUf, PUm, PUo.

Le tableau 2 donne les probabilités obtenues à partir des résultats de mesures contenus dans la base d'apprentissage, pour chacune des 18 combinaisons de modalités. La dispersion des mesures, observée pour les modalités seules, est alors beaucoup plus faible pour les modalités combinées et permet de procéder à une classification de manière plus efficace.

Tableau 2

| | ANf | ANm | ANo | AMf | AMm | AMo | AUf | AUm | AUo | PNf | PNm | PNo | PMf | PMm | PMo | PUf | PUm | PUo |
|---|---|---|---|---|---|---|---|---|---|---|---|---|---|---|---|---|---|---|
| PUo | | | | | | | | | 0,1 | | | | | | | | | 0,9 |
| PUm | | | | | 0,03 | | | 0,01 | | | | | | | | | 0,91 | |
| PUf | | | | | | | | | | 0 | | | 0 | | | 1 | | |
| PMo | | | | | | | | | | | | | | | 1 | | | |
| PMm | | | | | 0,01 | | | 0,01 | | | 0,02 | | | 0,96 | | | 0,03 | |
| PMf | | | | | | | | | | | | | 1 | | | 0 | | |
| PNo | | | | | | | | | 0 | | | 1 | | | | | | |
| PNm | | | | | | | | | | | 0,97 | | | 0,01 | | | | |
| PNf | | | | | | | 0 | | | 1 | | | | | | | | |
| AUo | | | | | | | | | 0,91 | | | | | | | | | 0,1 |
| AUm | | | | | 0,01 | | | 0,97 | | | | | | | | | 0,06 | |
| AUf | 0 | | | 0 | | | 1 | | | 0 | | | | | | | | |
| AMo | | | | | | 0,96 | | | | | | | | | | | | 0,03 |
| AMm | | 0,01 | | | 0,95 | | | 0,01 | | | | | | 0,02 | | | | |
| AMf | 0,03 | | | 0,95 | | | | | | | | | | | | | | |
| ANo | | | 0,96 | | 0,01 | 0,03 | | | | | | | | | | | | |
| ANm | 0,02 | 0,99 | | | | | | | | | 0,01 | | | 0,01 | | | | |
| ANf | 0,9 | | | | | | | | | | | | | | | | | |

La probabilité globale de détection d'une des combinaisons de modalité est de l'ordre de 0,96.

L'étape suivante consiste à reconnaître, pour une nouvelle mesure donnée, la modalité de chacune des classes " macro-texture du revêtement", "usure" et "sculpture" dans laquelle la mesure a été effectuée.

Le tableau 3 permet de déterminer les probabilités de détection de la modalité d'une des trois classes en fonction des combinaisons de modalités.

Ce tableau 3 indique que, si une mesure est affectée à la classe "AUf" (Hiver, Usé revêtement fermé), on peut avoir une bonne confiance dans la détermination de la sculpture (1), de l'état d'usure (U) et de la macro-texture du revêtement (1). Une relative moins bonne confiance est obtenue dans la classe "AUo" (Hiver, Usé, ouvert) pour laquelle la prédiction sur le type de sculpture pneumatique est moins bonne (0,91).

Tableau 3

| Classe trouvée | Probabilité de détection de la classe | | |
| --- | --- | --- | --- |
| | Sculpture | Usure | Revêtement |
| **ANf** | 1 | 0,95 | 0,98 |
| **ANm** | 1 | 0,99 | 1 |
| **ANo** | **0,96** | **1** | **1** |
| **AMf** | **0,98** | **0,95** | **1** |
| **AMm** | 0,97 | 0,96 | 1 |
| **AMo** | 0,99 | 0,96 | 0,99 |
| **AUf** | 1 | 1 | 1 |
| **AUm** | 0,98 | 0,98 | 1 |
| **AUo** | 0,91 | 1 | 1 |
| **PNf** | 0,98 | 0,95 | 1 |
| **PNm** | 0,99 | 0,98 | 1 |
| **PNo** | 1 | 1 | 1 |
| **PMf** | 1 | 0,97 | 1 |
| **PMm** | 0,97 | 0,98 | 1 |
| **PMo** | 1 | 1 | 1 |
| **PUf** | 1 | 0,97 | 1 |
| **PUm** | 0,94 | 0,97 | 1 |
| **PUo** | 0,87 | 0,97 | 1 |

A partir de la base d'apprentissage, on localise les zones dans lesquelles sont situées les modalités combinées dans l'espace discriminant réduit, ainsi que leur centre de gravité et leur dispersion. Typiquement, dans le cas de la présente description, on localise dans l'espace discriminant réduit, les 18 zones des 18 modalités combinées considérées.

Puis, à partir de la localisation du vecteur associé à chaque nouvelle mesure et transformé dans l'espace vectoriel réduit, on détermine pour chacune des modalités d'une classe, une probabilité pour chacune des combinaisons de modalité contenant cette modalité, et on attribue à cette mesure la modalité de la classe ayant la plus forte probabilité.

Ainsi, si la classe météo trouvée est "sec", les 21 variables du vecteur issu de la mesure permettent, en s'appuyant sur l'analyse discriminante basée sur la base d'apprentissage de déterminer une probabilité d'appartenance à une des modalités combinées, selon la classe " macro-texture du revêtement", la classe "usure" ou la classe "sculpture", soit typiquement, dans le cas servant de support à la présente description, la probabilité d'appartenance à une des 18 classes de modalités combinées : ANf, ANm, ANo, AMf, AMm, AMo, AUf, AUm, AUo, PNf, PNm, PNo, PMf, PMm, PMo, PUf, PUm, PUo. Cette probabilité se calcule par exemple en évaluant une distance par rapport au centre de gravité de la classe de modalité combinée considérée.

La probabilité d'appartenance de la mesure à une des modalités d'une classe particulière, autre que la classe météo, s'effectue alors à l'aide d'un second calcul de probabilité dénommé modèle "sculpture+usure+revêtement sur sol sec" de la manière suivante.

La probabilité de la modalité macro-texture du revêtement "fermée" est déduite de la relation p(macro-texture= "fermé") = p (« fermé ») = p(ANf) + p(AMf) + p(AUf) + p(PNf) + p(PMf) + p(PUf)

De même, on déduit :

p(macro-texture ="médium") = p("médium") = p(ANm) + p(AMm) + p(AUm) + p(PNm) + p(PMm) + p(PUm), et p(macro-texture = "ouvert") = p("ouvert") = p(ANo) + p(AMo) + p(AUo) + p(PNo) + p(PMo) + p(PUo).

On cherche alors celle des trois probabilités qui est maximum et qui donne la modalité de la macro-texture du revêtement détecté et la probabilité associée : p(macro-texture) = max [p("fermé"), p( "médium"), p( "ouvert")].

De même, p(sculpture = max [p("Hiver"), p("Eté")] avec :

p(sculpture = "Hiver") = p("Hiver") = p(ANf) + p(ANm) + p(ANo) + p(AMf) + p(AMm) + p(AMo) + p(AUf) + p(AUm) + p(AUo) et p(sculpture = "Eté") = p("Eté") = p(PNf) + p(PNm) + p(PNo) + p(PMf) + p(PMm) + p(PMo) + p(PUf) + p(PUm) + p(PUo).

Enfin, l'usure est donnée par p(usure = max [p("neuf"), p("mi-usé"), p("usé")] avec :

$$p(usure = "neuf") = p ("neuf") = p(ANf) + p(ANm) + p(ANo) + p(PNf) + p(PNm) + p(PNo),$$

p(usure = "mi-usé) = p (mi-usé") = p(AMf) + p(AMm) + p(AMo) + p(PMf) + p(PMm) + p(PMo) et,

$$p(usure = "usé") = p ("usé ") = p(AUf) + p(AUm) + p(AUo) + p(PUf) + p(PUm) + p(PUo).$$

La probabilité d'affectation à une modalité issue d'une mesure donnée est alors confrontée à un seuil déterminé pour décider de la validité du résultat trouvé et de sa transmission à un système d'affichage ou d'assistance à la conduite. A titre d'exemple, toutes les détections dont la probabilité de classement n'est pas au moins égale à 0.75 sont rejetées. Et si cette probabilité est comprise entre 0.75 et 0.95, le résultat issu de la mesure doit être confirmé par une ou plusieurs mesures suivantes.

On observera ici que, à l'inverse de l'état météorologique ou de la macro-texture du revêtement de la route qui peuvent évoluer brusquement et qui nécessitent des prises de décision rapides, l'évolution de l'usure ou le type de sculpture du pneumatique sont des facteurs beaucoup plus stables dans le temps, typiquement sur des échelles de temps correspondant à des distances parcourues de 100 kilomètres voire de 1000 kilomètres. Cependant comme la détection de ces paramètres pneumatique dépend de l'état de la route, on arrive au paradoxe qu'il faut pouvoir les détecter quasiment aussi rapidement que l'état de la route.

On peut réduire fortement la probabilité d'une détermination à tort sur ces deux critères en cumulant les observations obtenues à l'aide de plusieurs mesures consécutives, avant de décider de l'état d'usure réel ou du type de sculpture de pneumatique monté sur le véhicule.

Les modes de réalisation de l'invention servant de base à la présente description ne sont pas limitatifs, et peuvent faire l'objet de variantes de mise en oeuvre, en particulier dans le choix des méthodes d'analyse numérique des données, pour autant qu'ils permettent d'obtenir les effets techniques tels que décrits et restent dans le cadre de la présente invention définie par les revendications.

**Revendications**

1. Procédé de représentation cartographique de données concernant l'état d'une route, le procédé comprenant les étapes suivantes :

   - Une étape d'enregistrement, dans une base de données, d'une information concernant l'état météo d'une route et d'une information concernant la macro-texture-du revêtement, déterminés par un véhicule se déplaçant sur ladite route, **la macro-texture du revêtement étant caractérisée par une profondeur moyenne de texture,**
- Une étape d'enregistrement de la position GPS du véhicule correspondant aux enregistrements effectués,
- Une étape d'affichage, sur une carte représentant le trajet effectué par le véhicule, de l'état météo et de la macro-texture du revêtement en fonction de la position GPS,

où la macro-texture du revêtement est représentée en superposant au trajet effectué par le véhicule un trait en différentes teintes pour représenter différents états du revêtement.

2. Procédé de représentation cartographique selon la revendication 1, dans lequel l'état météo est compris dans le groupe comprenant : un état sec, un état humide, un état mouillé, un état hivernal tel qu'un état de neige ou de glace.

3. Procédé de représentation cartographique selon la revendication 1 ou 2, dans lequel la macro-texture du revêtement est comprise dans le groupe comprenant un état fermé, un état médium et un état ouvert».

4. Procédé de représentation cartographique selon l'une des revendications précédentes, dans lequel, au cours de l'étape d'enregistrement, on enregistre également une information concernant un évènement ponctuel affectant l'état de la route, et dans lequel l'étape d'affichage comprend également la représentation de cet évènement.

5. Procédé de représentation cartographique selon l'une des revendications précédentes dans lequel au cours des étapes d'enregistrement, on enregistre des informations et des positions GPS provenant de plusieurs véhicules différents, le procédé comprenant alors une étape de regroupement de ces données pour les afficher sous forme d'une carte unique pour l'ensemble des véhicules.

6. Procédé de représentation cartographique selon l'une des revendications précédentes comprenant l'étape d'enregistrer, outre la position GPS du véhicule, la date et l'heure de l'enregistrement.

7. Procédé de représentation cartographique selon la revendication 6 comprenant l'étape de mettre à jour l'affichage si des données enregistrées concernent un segment de route pour lequel des données ont déjà été affichées, à condition que les données enregistrées aient une date et une heure ultérieures aux données ayant fait l'objet d'un affichage.

**Patentansprüche**

1. Verfahren zur kartographischen Darstellung von den Zustand einer Straße betreffenden Daten, wobei das Verfahren die folgenden Schritte umfasst:

- Einen Schritt des Aufzeichnens, in einer Datenbank, einer den Witterungszustand einer Straße betreffenden Information und einer die Makrotextur des Belags betreffenden Information, die von einem sich auf der Straße bewegenden Fahrzeug bestimmt werden, wobei die Makrotextur des Belags durch eine mittlere Texturtiefe gekennzeichnet ist,
- Einen Schritt des Aufzeichnens der den durchgeführten Aufzeichnungen entsprechenden GPS-Position des Fahrzeugs,
- Einen Schritt des Anzeigens, auf einer die von dem Fahrzeug durchgeführte Route darstellenden Karte, des Witterungszustands und der Makrotextur des Belags in Abhängigkeit von der GPS-Position, wobei die Makrotextur des Belags dargestellt wird, indem der von dem Fahrzeug durchgeführten Route eine Linie in verschiedenen Farbtönen überlagert wird, um verschiedene Zustände des Belags darzustellen.

2. Verfahren zur kartographischen Darstellung nach Anspruch 1, wobei der Witterungszustand in der Gruppe enthalten ist, die umfasst: einen trockenen Zustand, einen feuchten Zustand, einen nassen Zustand, einen winterlichen Zustand wie einen Schnee- oder Eiszustand.

3. Verfahren zur kartographischen Darstellung nach Anspruch 1 oder 2, wobei die Makrotextur des Belags in der Gruppe enthalten ist, die einen geschlossenen Zustand, einen mittleren Zustand und einen offenen Zustand umfasst.

4. Verfahren zur kartographischen Darstellung nach einem der vorhergehenden Ansprüche, wobei, während des Schritts des Aufzeichnens, auch eine Information aufgezeichnet wird, die ein den Zustand der Straße beeinflussendes punktuelles Ereignis betrifft, und wobei der Schritt des Anzeigens auch die Darstellung dieses Ereignisses umfasst.

5. Verfahren zur kartographischen Darstellung nach einem der vorhergehenden Ansprüche, wobei während der Schritte des Aufzeichnens von verschiedenen Fahrzeugen stammende Informationen und GPS-Positionen aufgezeichnet werden, wobei das Verfahren dann einen Schritt des Zusammenfassens dieser Daten umfasst, um sie in Form einer einzigen Karte für die Gesamtheit der Fahrzeuge anzuzeigen.

6. Verfahren zur kartographischen Darstellung nach einem der vorhergehenden Ansprüche, umfassend den Schritt, neben der GPS-Position des Fahrzeugs das Datum und die Uhrzeit der Aufzeichnung aufzuzeichnen.

7. Verfahren zur kartographischen Darstellung nach Anspruch 6, umfassend den Schritt, die Anzeige zu aktualisieren, wenn aufgezeichnete Daten ein Straßensegment betreffen, für das Daten bereits angezeigt worden sind, sofern die aufgezeichneten Daten ein späteres Datum und eine spätere Uhrzeit als die Daten haben, die Gegenstand einer Anzeige gewesen sind.


**Claims**

1. Method for mapping data relating to the conditions on a road, the method comprising the following steps:

   - A step for recording, in a database, information relating to the weather conditions on a road and information relating the macro-texture of the road surface, determined by a vehicle travelling on the said road, the macro-texture of the road surface being **characterized by** the mean texture depht,
   - A step for recording the GPS position of the vehicle corresponding to the recordings made,
   - A step for displaying, on a map showing the route followed by the vehicle, the weather conditions and the macro-texture of the road surface as a function of the GPS position,

   wherein the the macro-texture of the road surface is represented by superposing, over a given route, a line whose colours correspond to various states of the road surface.

2. Mapping method according to Claim 1, in which the weather conditions are included within the group comprising: a dry condition, a damp condition, a wet condition, a wintery condition, such as a snow-covered or icy condition.

3. Mapping method according to either of Claims 1 and 2, in which, during the recording step, information is also recorded relating to the macro-texture of the road surface, and in which the display step also comprises the representation of this macro-texture.

4. Mapping method according to one of the preceding claims, in which the macro-texture of the road surface is included within the group comprising a closed state, a medium state and an open state.

5. Mapping method according to one of the preceding claims in which, during the recording steps, information and GPS positions coming from several different vehicles are recorded, the method then comprising a step for organizing the data in order for it to be displayed in the form of a single map for all of the vehicles.

6. Mapping method according to one of the preceding claims comprising the step for recording, aside from the GPS position of the vehicle, the date and the time of the recording.

7. Mapping method according to Claim 6 comprising the step for updating the display if the recorded data relates to a segment of road for which data has already been displayed, as long as the recorded data has a date and a time that is later than the data having been previously displayed.

**Figure 1**

**Figure 2**

**Figure 3**

Figure 4

**Figure 5**

**Figure 6**

**Figure 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015106299 A1

- US 2013155061 A1

**Littérature non-brevet citée dans la description**

- **BORRIELLO GAETANO et al.** Demo : Mobile Crowdsensing of Road Surface Roughness. *Proceedings of the 13th Annual International Conference on Mobile Systems, Applications, and Services, MobiSys '15*, 18 May 2015, 439-439

- Implementation of a multi-modal mobile sensor system for surface and subsurface assessment of roadways. **R WANG MING et al.** PROCEEDINGS OF SPIE. IEEE, 27 March 2015, vol. 9436, 943607-943607
- **DEEPAK RAJAMOHAN**. *road condition and texture estimation by fusing GPS, accelerometer and camera data*, 01 September 2014